**Europäisches Patentamt**

**European Patent Office**

**Office européen des brevets**

(11) Publication number: **0 091 826**
**B1**

## EUROPEAN PATENT SPECIFICATION

(45) Date of publication of patent specification: **15.11.89**

(21) Application number: **83302057.1**

(22) Date of filing: **13.04.83**

(51) Int. Cl.⁴: **G 01 D 5/26,** G 01 H 9/00

(54) Improved fiber optic sensor for detecting very small displacements of a surface.

(30) Priority: **14.04.82 US 368425**

(43) Date of publication of application:
**19.10.83 Bulletin 83/42**

(45) Publication of the grant of the patent:
**15.11.89 Bulletin 89/46**

(84) Designated Contracting States:
**AT BE CH DE FR GB IT LI LU NL SE**

(56) References cited:
**FR-A-2 293 713**
**GB-A-2 076 558**

**PHYSICS LETTERS, vol. 27a, no. 6, August 12, 1968, pages 329-330, Amsterdam (NL); G. WINTERLING et al.: "Measurements of phonon lifetimes by two successive light pulses".**

**APPLIED PHYSICS LETTERS, vol. 41, no. 3, August 1982, pages 231-233, New York (US); J. BOWERS: "Fiber-optical sensor for surface acoustic waves".**

(73) Proprietor: **THE BOARD OF TRUSTEES OF THE LELAND STANFORD JUNIOR UNIVERSITY**
**Encina 105 Stanford University**
**Stanford California 94305 (US)**

(72) Inventor: **Kino, Gordon S.**
**867 Cedro Way**
**Stanford California 94305 (US)**
Inventor: **Bowers, John E.**
**Bell Telephone Laboratories Room 4B513**
**Holmdel New Jersey 07733 (US)**

(74) Representative: **Rushton, Ronald et al**
**SOMMERVILLE & RUSHTON 11 Holywell Hill**
**St. Albans Hertfordshire AL1 1EZ (GB)**

Courier Press, Leamington Spa, England.

# EP 0 091 826 B1

**Description**

Background of the invention

This invention relates generally to sensors for detecting very small displacements of a surface, and, more particularly, the invention relates to an improved surface acoustic wave sensor which employs an optical fiber interferometer.

The invention is primarily useful as a surface acoustic wave detector of greatly improved sensitivity over the surface acoustic wave detectors of the prior art. A surface acoustic wave is a wave representing vibration which is propagating through a solid and causes the surface of the solid to undulate.

The invention also has application in other fields as well. Because the invention described herein can detect the amplitude and frequency of the displacement of a reflecting surface, it is apparent that the invention can also be used in any other application where it is necessary to detect very small movements of a surface. Typically, the displacements of the surface which can be sensed by the invention described herein can range as low as .0003 angstroms. An angstrom is $10^{-10}$ meters.

As an example, the invention could be used as a very sensitive modulator to change the phase of one light wavetrain relative to another wavetrain in proportion to the small displacements of a reflecting surface such as a mirror which is mechanically moved in accordance with the modulating signal. The invention might also be used to sense the relative flatness of revolving disk support surfaces used to support magnetic storage disks used for bulk storage in computer applications. Such disks must not wobble as they spin at high RPM's lest the flying heads floating over the disks crash into the surface and ruin the head and the disk. The invention could also be used as a microphone to pick up sound waves travelling in air or water where the sound waves are extremely weak but are capable of moving a reflecting surface.

A principal application of the present invention is to acquire detailed knowledge of the propagation characteristics such as frequency and amplitude of acoustic waves travelling through solids. Such information can be used in evaluating other devices such as surface acoustic wave delay lines, filters and sonic wave guides. Further, the invention can be used to test parts for cracks since the surface acoustic wave propagation characteristics change around the vicinity of cracks in the sample surface. Very tiny cracks not visible to the naked eye can be detected in this manner in critical high stress parts such as turbine blades for jet engines and various parts in the engine and power train of automobiles.

Prior art apparatus for measuring surface acoustic wave propagation characteristics were of the bulk optic variety in that they required lasers to beam coherent beams of light toward the sample surface. The beams were reflected by the surface and converted to electrical signals by some form of detector. Such prior art systems were very inconvenient because of the necessity of bringing the laser to the workpiece which might be located in a manufacturing area having temperature and vibration conditions which are not conducive to precise control necessary for the successful operation of such systems. Such random, uncontrollable environmental phenomena such as temperature changes, vibration and electromagnetic noise from motors in machines in manufacturing areas can cause problems in precisely aligning the optical equipment and electromagnetic noise problems in the sensitive electronic equipment which is used in such systems. Such equipment is used to convert the optical data to signals which can be interpreted to derive the propagation characteristics of the surface displacements of interest.

In GB—A—2,076,558, there is disclosed an interferometer for viewing a time-varying object in which an input light beam is split into two beams by a beam splitter. However, in this reference, the optical paths of the light signal before reflection upon the object are identical. Such an interferometer is thus not able to eliminate path length fluctuations which may result from vibrations, temperature or other external effects.

Summary of the disclosure

According to a first aspect of the present invention, there is disclosed an apparatus for detecting small displacements of a surface, comprising a light source for producing light, a first coupler for splitting the light into first and second light signals, means for directing the light onto the surface, delay line means for delaying the first light signal relative to the second light signal by a delay period and a detector for detecting light reflected back from the surface. This apparatus is characterized in that the coupling means split the light from the source prior to reflection of the light on the surface, the first and second light signals being directed to the surface by the directing means so that the signals are reflected back to the directing means from the surface as first reflected and second reflected light signals, respectively, and in that the delay line means are connected to receive the first and second light signals from the first coupler so as to delay the first light signal relative to the second light signal and further connected to receive the first reflected and second reflected light signals from the directing means so as to delay the second reflected signal relative to the first reflected signal by the delay period, the phase difference between the first reflected signal and the delayed second reflected signal being detected by the detector in order to measure the displacement on the surface. The light which is divided by the first coupler is preferably a continuous wave of light having a coherence time which is less than the delay period.

Advantageously, the light which is divided by the first coupler is comprised of a coherent light pulse, the pulse having a duration less than the delay period imposed by the delay line means.

In a particular embodiment of the present invention, the first coupler evenly splits the light into the first

2

EP 0 091 826 B1

and second light signals. Typically, the light source is a laser which produces a single coherent light signal having a coherence length substantially greater than the surface displacement.

In the preferred embodiment of the present invention, the delay line means comprises first and second fiber optic waveguides for guiding the first and second light signals, respectively, and a second coupler connected to the first and second waveguides to receive the first and second signals, the first fiber optic waveguide being longer than the second fiber optic waveguide by an amount sufficient to cause the first light signal to be delayed relative to the second light signal by the delay period.

The directing means may also comprise a third fiber optic waveguide connected to the second coupler for directing the first and second light signals from the second coupler to the surface and the first reflected and second reflected light signals from the surface to the second coupler.

Preferably, the second coupler is connected to receive the first reflected and second reflected light signals from the third fiber optic waveguide to couple the signals to the first and second fiber optic waveguides. The first and second fiber optic waveguides advantageously guide the second reflected and first reflected light signals, respectively, the second reflected light signal being delayed relative to the first reflected light signal by the delay period. The first coupler is preferably connected to combine the first reflected light signal and the delayed second reflected light signal from the second and first fiber optic waveguides, respectively, to form a combined signal and direct the combined signal to the detector.

In the preferred embodiment of the present invention, a fourth fiber optic waveguide is connected to the first coupler for detecting the combined signal to the detector. The detector is typically a photodetector for detecting the intensity of the combined signal. A phase modulator may be located in either the first or the second fiber optic waveguides for causing a continuous periodically time-varying phase difference of light travelling in the first and second fiber optic waveguides.

The detector advantageously generates an output signal component which has an amplitude which is proportional to the amplitude of the surface displacement and which amplitude varies in time at the difference frequency between the frequency of the surface displacement and the frequency of the phase modulator. The detector may include means for filtering out components of the output signal which are at frequencies other than the difference frequency and for integrating the difference frequency component over a plurality of periods of the difference frequency. The pulses are typically of a duration less than the period of the surface displacement to be sensed. The detector preferably has a bandwidth greater than the center of frequency of the surface displacement to be sensed.

A polarization controller may be located in either the first or the second fiber optic waveguides between the first coupler and the second coupler for causing the first reflected light signal and the delayed second reflected light signal to arrive at the detector in the same polarization. The polarization controller is ideally coupled to one of the first and second fiber optic waveguides at a location selected to cause the first reflected light signal and the delayed second reflected light signal to arrive at the detector shifted in relative phase by $\pi/2$ radians to provide a phase difference of $\pi/2$ in addition to any phase difference caused by the displacements of the surface.

In the preferred embodiments of the present invention, the first and second couplers are fiber optic directional couplers.

According to a second aspect of the present invention, there is disclosed a method of sensing displacement of a surface, comprising the steps of directing light emitted by a light source to the surface, splitting the light into first and second light signals, delaying the first light signal relative to the second light signal by a delay period by means of an optical delay line device and detecting light reflected back from the surface.

The method of the present invention is characterized by the steps of splitting the light before the light impinges on the surface, delaying the first light signal so that first signal arrives at the surface a time period T after the second light signal, receiving in the optical delay device first reflected and second reflected light signals reflected from the surface corresponding to the first and second light signals, respectively, the second reflected signal preceding the first reflected signal, delaying the second reflected optical signal by the time period T, thereby providing a delayed second reflected light signal, combining the delayed second reflected light signal and the first reflected light signal to cause interference therebetween and evaluating in the detector the relative phase shift between the first reflected signal and the delayed second reflected signal in the combined signal to determine the displacement of the surface.

The optical delay device preferably comprises first and second fiber optic waveguides for guiding the first and second coherent light signals, respectively.

The method preferably comprises the step of detecting the amplitude of the combined signal caused by the interference. The first and second light signals are preferably pulses or continuous wave signals generated by a short coherence length source.

The method of the present invention may also comprise the steps of phase modulating the first and second reflected optical signals at a modulation frequency which is related to the frequency of movement of the surface such that the difference frequency between the modulation frequency and the surface movement frequency lies within a predetermined range and detecting the amplitude of the combined signal at the difference frequency. This method alternatively comprises the steps of intensity modulating the first and second optical signals at a modulation frequency related to the frequency of movement of the

3

surface such that the difference frequency lies within a predetermined range and detecting the amplitude of the combined signal at the difference frequency.

The method advantageously comprises the steps of intensity modulating the first and second optical signals at a second modulation frequency, detecting the amplitude of the combined signal at either the sum or difference frequency between the modulation frequency and the second modulation frequency to provide a first detected signal, detecting the amplitude of the combined signal at the difference frequency between the modulation frequency and the frequency of movement of the surface to provide a second detected signal and dividing the second detected signal by the first detected signal to provide a measure of the amplitude of the surface movement which is substantially independent of sample reflectivity.

Brief description of the drawings

Figure 1 is a schematic diagram illustrating the invention.

Figures 2A—2D are diagrams of the four possible paths that the wavetrains travelling between the light source and the detector can take.

Figures 3A—3D are timing diagrams showing the relative arrival times at the surface and at the detector of the four wavetrains that follow the paths of Figures 2A—2D.

Figure 4 is a diagram of the interaction of the second and third wavetrains with the surface of the sample.

Figure 5 is a vector addition diagram illustrating the addition of the wavetrains two and three at the detector 48.

Figure 6 is the preferred embodiment of the invention.

Figure 7 is a graph of the output voltage of the sensor versus surface displacement.

Figure 8 is a graph of the frequency response of the sensor.

Detailed description of the preferred embodiment

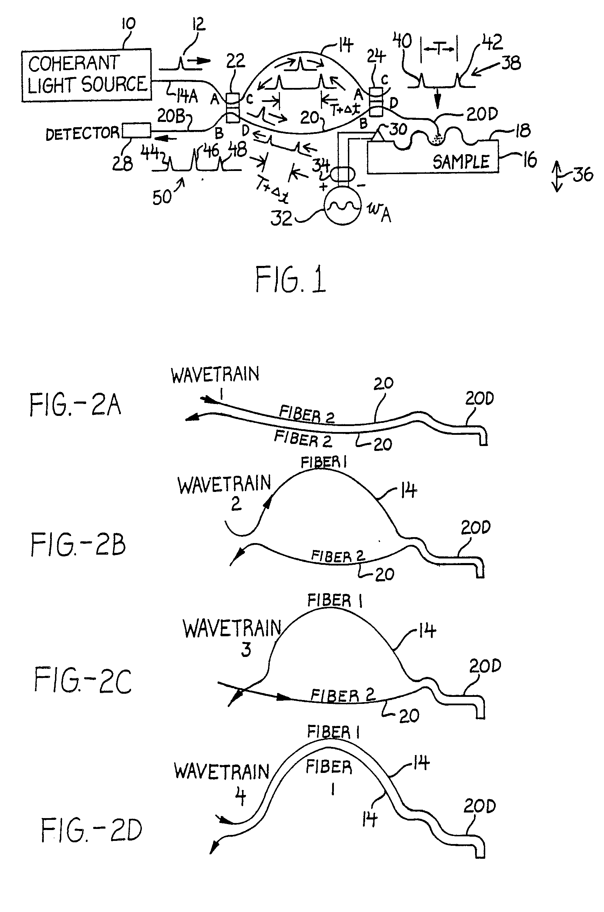

Figure 1 is a schematic diagram illustrating the invention. A partially coherent light source 10 functions to supply a partially coherent light wavetrain either as a pulse or burst, as is illustrated at 12, or as a continuous wave (cw) of light having a predetermined coherent length. The light source 10 is butt coupled or otherwise aligned with the end of a first monomode fiber optic wave guide 14A which provides a first optical path toward a sample 16 having a test surface 18. The first optical fiber 14 is coupled to a second monomode fiber optic wave guide 20 by a first directional coupler 22 having ports A, B, C and D. The details of the directional coupler are described in *Electronics Letters*, Vol. 16, No. 7 at page 260-1 published on March 27, 1980 and in U.S. patent 4493528. The fiber 14A entering the port A of the coupler 22 continues through the coupler and emerges as a fiber 14 from the port C. The directional coupler 22 can be tuned to couple any fraction of the amount of light energy in the first optical fiber 14 into a second optical fiber 20 which provides a second optical path. The second optical fiber 20 enters the port D of the coupler 22 and emerges as the fiber 20B from the port B. Actually, the fibers 14A and 14 are segments of the same fiber and the fibers 20B and 20 are segments of the same fiber.

The first and second optical fibers 14 and 20 are again coupled near the test sample by a second directional coupler 24 which also has ports A, B, C and D. The length of the optical fibers 14 and 20 between the directional couplers 22 and 24 is not the same in the preferred embodiment. The first optical fiber 14 has a longer geometric length than the second optical fiber 20. The difference between the geometric length of the fiber 14 between the coupler 22 and 24 and the length of the fiber 20 between the couplers 22 and 24 will be called the differential path length. The purpose of the differential path length is to impose a differential time delay T on all wavetrains passing through the first optical fiber 14 in either direction relative to the wavetrains travelling in the fiber 20 in the same direction. For cw operation, the delay time T should be greater than the coherent time of the coherent light source 10 for reasons which will be explained in connection with the description of the operation of the invention.

A fiber optic probe 20D is coupled to the D port of the second directional coupler 24. In the preferred embodiment, the second optical fiber 20 enters the second directional coupler 24 at the port B and continues uninterrupted through the coupler and emerges at the port D as the fiber optic probe 20D. In the preferred embodiment, the fiber optic probe is placed close enough to the surface 18 to receive as much reflected light as possible of the light directed toward the surface. A microscope lense system can be placed between the end of the fiber and the substrate surface being examined to optimize the light collection efficiency. Larger probe to sample distances can be used, for example, if a higher power laser is used or if an amplifier is used at the detector output.

The other end of the second optical fiber 20 enters the first directional coupler 2 at the port D and continues uninterrupted through the directional coupler and emerges at the port B as the fiber optic wave guide 20B which carries the combined reflected pulses to a detector 28. In the preferred embodiment, the detector 28 is a photodiode which is coupled to the fiber segment 20B. The segment 20B of fiber optic wave guide 20 is aligned with the detector 28 such that light pulses emerging from the end of the segment 20B fall as near as possible to the junction of the photodiode 28 so as to obtain maximum sensitivity of the diode to incident light. It is well known that incident light falling upon a photodiode at a distance somewhat removed from the junction location will cause hole-electron pairs to be formed in the semiconductor material. However, not all of these holes and electron reach the junction. Part of the current generated in the diode is lost because of recombination during travel of the holes and electrons through the semiconductor material. In fact, the output current for a given light intensity falls off as a function of the distance of the illuminated spot from the junction. Therefore, the maximum sensitivity will be achieved in the invention if the segment 20B of fiber optic wave guide is precisely aligned with the location of the junction in the photodiode of the detector 28.

For purposes of discussion, the movement of the test surface 18 of the sample 16 is shown as being caused by a transducer 30 which is driven by a driver 32 which provides an electrical driving signal. The driving signal on the conductors 34 is converted to mechanical motion by the transducer 30 which causes vibrations to propagate through the sample 16. These vibrations manifest themselves as surface acoustic waves causing the test surface 18 to undulate in accordance with the frequency and the amplitude of the surface acoustic wave. In the example shown, the driver 32 supplies a sinusoidal driving wave form having a frequency $\omega_A$. The driving wave form need not necessarily be sinusoidal, however. The sample 16 could, in other applications, be moving in motion back and forth in the direction indicated by the arrow 36 as opposed to having vibrations propagating therethrough causing surface acoustic waves. Such movement can also be sensed by the apparatus of Figure 1.

The directional couplers 22 and 24 function to split the original single wavetrain 12 into four light wavetrains which reach the detector 28. Each of the four wavetrains takes a different optical path, but two of the paths have the same geometric length except for differences in the geometric path between the end of the probe 20D and the test surface 18 of the sample 16. The first wavetrain of light 12 is split by the first directional coupler 22 into two wavetrains travelling toward the surface 18, one in each fiber. The directional coupler 22, in the preferred embodiment, is tuned to 3dB coupling such that approximately half the incoming energy is coupled out to the other fiber optic wave guide in the coupler. That is, the wavetrain 12 coming in on fiber segment 14A has 50% of its energy coupled into the second optical fiber 20 and the remaining 50% of the energy on the fiber 14A stays in the first optical fiber 14 and exits at the port C.

The portion of the light signal travelling towards the surface 18 in the fiber 14 experiences a time delay T relative to the delay experienced by the portion of the light signal travelling towards the surface 18 in the fiber 20. The second directional coupler 24 is also a 3 dB (50%) coupler in the preferred embodiment. The two incoming light signals at the ports A and D of the second directional coupler 24 are combined in the probe 20D by coupling part of the energy coming in at the port A into the probe 20D and coupling part of the incoming energy at the port B to the fiber 14 to exit at the port C while leaving the balance of the incoming energy at the port B in the fiber 20 to exit at the port D. The two wavetrains, separated by the delay T in the probe 20D, are directed towards the surface 18. The time displacement between the two wavetrains 40 and 42 travelling toward the surface is illustrated generally at 38 in Figure 1.

A portion of each of the incoming wavetrains 40 and 42 is reflected from the surface 18 and is received by the probe 20D. These two reflected wavetrains travel through the probe 20D and enter port D of the second directional coupler 24. Part of the energy of each of the two reflected wavetrains is coupled into the first optical fiber 14 and exits from the port A travelling away from the surface 18. That is, in the preferred embodiment, half of the energy in each of the reflected wavetrains is coupled into the first optical fiber 14 and travels therein away from the surface 18, while the other half of the energy entering the port D remains in the second optical fiber 20 and exits from the port B. Both of the two reflected wavetrains exiting from the port A and from the port B travel away from the surface 18 separated by the delay time T plus A differential delay time $\Delta t$ which results from differences in the distance to the surface 18 from the end of the probe 20D at the different times of arrival of the wavetrains 40 and 42 at the surface 18.

Each of the pairs of reflected wavetrains travelling in the fibers 14 and 20 experience another delay in travelling between the coupler 24 and the coupler 22. However, the pair of reflected wavetrains travelling in the fiber 14 encounter a delay which is longer than the delay encountered by the pair of reflected wavetrains travelling in the fiber 20 with the difference equal to the differential delay time T.

Upon reaching the directional coupler 22, half the energy from each of the reflected wavetrains entering at the port C is coupled into the fiber 20. These two wavetrains exit from the port B and travel along the fiber segment 20B to the detector 28. Half of the energy of each of the reflected wavetrains travelling away from the surface in the fiber 20 is coupled into the fiber segment 14 where it exits from the port A toward the light source 10 and is lost. The remaining half of the energy passes through the coupler 22 and exits at the port B. These two reflected wavetrains are guided along the fiber segment 20B to the detector 28.

Each of the four reflected wavetrains takes a different optical path from the coherent light source 10 to the detector 28. These four possible paths are illustrated in Figures 2A through 2D. Figure 2A shows the shortest possible geometric path from the light source 10 to the detector 28. The Figure 2A path represents that portion of the light energy which travels through the fiber segment 14A, transfers to the second optical fiber 20 in the first directional coupler 22 and passes through the second directional coupler 24 by entering the port B and exiting the port D and thereafter travels through the probe segment 20D to the surface 18. From the surface 18, the first wavetrain that travels the path of Figure 2A is reflected back up into the probe segment 20D whereupon it passes through the second directional coupler 24 by entering the port D and exiting the port B. It then travels through the second optical fiber 20 and enters the first directional coupler 22 at the port D exiting therefrom at the port B. This first wavetrain then travels to the detector 28 in the fiber segment 20B. Because the Figure 2A path is the shortest possible geometric path from the light source to the detector 28, the first wavetrain arrives first at the detector as the pulse 44 illustrated generally at 50 in Figure 1.

The second wavetrain which follows the path of Figure 2B enters the first directional coupler 22 at the port A and exits at the port C travelling in the fiber 14 to the port A of the second directional coupler 24. Part of the energy of this wavetrain is coupled into the second fiber 20 and exits via the port D where it is guided by the probe segment 20D to the surface 18. The remaining energy in the fiber 14 exits at the port C and is lost. From the surface 18, part of the energy is reflected back into the probe 20D and enters the second coupler 24 at the port D exiting therefrom at the port B. The reflected wavetrain then travels away from the surface 18 in the fiber 20 entering the port D of the first coupler 22 and exiting therefrom at the port B where it is guided to the detector 28.

The third wavetrain that travels the path of Figure 2C enters the first coupler 22 at the port A and is coupled into the second fiber 20 exiting therefrom at the port D. The wavetrain then travels towards the surface 18 in the second fiber 20 entering the port B of the second coupler 24 and exiting therefrom at the port D whereupon it is guided through the probe segment 20D and directed toward the surface 18. Part of the energy is reflected back from the surface 18 into the probe 20D. This reflected wavetrain enters the second coupler 24 at the port D and part of its energy is coupled into the first fiber 14. This coupled energy exits the second coupler 24 at the port A and travels away from the surface 18 in the fiber 14 to enter the first coupler 22 at the port C. The first coupler 22 couples approximately half the energy of the wavetrain energy into the second fiber 20 where it exits at the port B and is guided by the fiber segment 20B to the detector 28. The other half of the energy exits the coupler 22 at the port A and is lost.

Figures 2B and 2C represent the two geometric paths which have the same geometric path length from the light source 10 to the detector 28 except for differences in the geometric distance between the end of the probe 20D and the surface 18 if the surface 18 is moving. The wavetrains which follows the path of Figure 2B and 2C arrive at the detector 28 at approximately the same time except for a time difference $\Delta t$ caused by movement of the surface 18. These two wavetrains are coherent when they reach the detector 28, and they will, therefore, interfere with each other. The time difference $\Delta t$ translates into a certain phase shift between the second and third wavetrains of Figure 2B and Figure 2C. This phase shift is caused by the difference in the geometric path length between the end of the probe 20D and the surface 18 at the two different times at which these two wavetrains arrive at the surface 18 as will be explained in more detail below.

The Figure 2B and Figure 2C wavetrains are combined and interfere in the fiber segment 20B thereby causing a pulse 46 in Figure 1. The amplitude of the pulse 46 depends upon the phase difference between the second and third wavetrains and can be interpreted to determine the amplitude of the movement of the surface 18 relative to the end of the probe 20D.

The wavetrain which travels the path illustrated in Figure 2D travels the longest geometric path from the light source to the detector 28. This wavetrain enters the first coupler 22 at the port A and half its energy exits the coupler 22 at the port C travelling toward the surface 18 in the first fiber 14. The wavetrain then enters the second coupler 24 at port A and half of its energy is coupled into the second fiber 20. This energy exits the coupler 24 at the port D whereupon it is guided toward the surface 18 by the probe segment 20D. Part of the energy is reflected from the surface 18 back into the probe 20D where it is guided into the second coupler 24 at port D. Half of the energy entering the port D is coupled back into the first fiber 14 and exits the second coupler 24 at port A. This reflected wavetrain travels away from the surface 18 in the fiber 14 and enters the port C of the first coupler 22. Half the energy entering the port C is coupled into the second fiber 20 and exits from the port B whereupon it is guided by the fiber segment 20B to the detector 28. The other uncoupled half of the energy exits port A and propagates through the fiber segment 14A and is lost. The wavetrain following the path of Figure 2D arrives last in time of the four wavetrains arriving at the detector 28. This fourth wavetrain is illustrated generally at 50 as the pulse 48 of Figure 1.

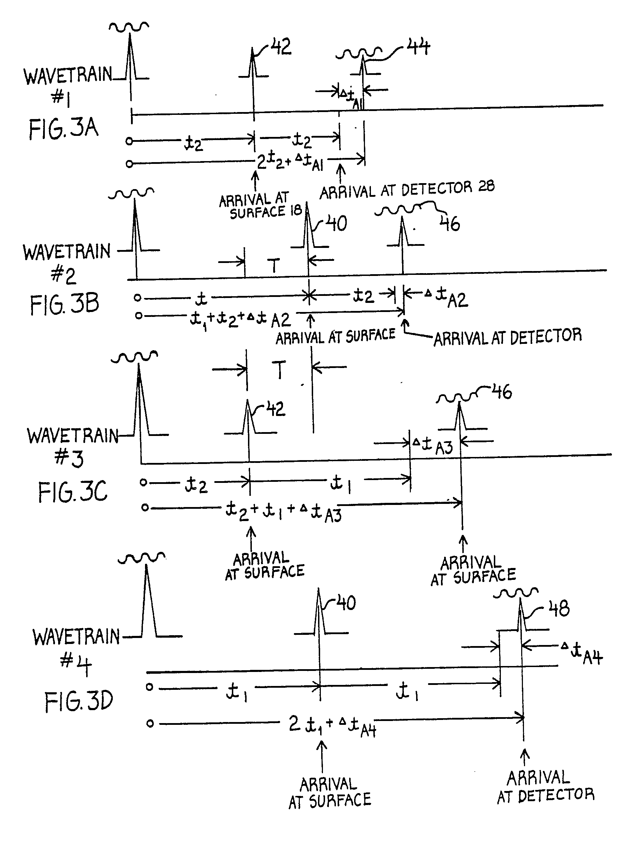

Figures 3A through 3D show timing diagrams for the various arrival times of the four wavetrains corresponding to the paths shown in Figures 2A through 2D. Figure 3A corresponds to Figure 2A, Figure 3B corresponds to Figure 2B and so on.

Referring to Figure 3A, wavetrain one 42 arrives at the surface 18 after a time $t_2$ which represents the delay in propagation through the second fiber 20 in Figure 1. After leaving the end of the probe segment 20D, wavetrain one 42 encounters an additional delay $\Delta t_{A1}$ which represents the time which it takes the light to travel from the end of the probe to the sample surface 18 and back up to the probe. Thereafter wavetrain one 42 encounters another delay of time $t_2$ in travelling back toward the detector 28 in the second fiber 20. Wavetrain one emerges from the fiber segment 20B as the pulse 44 in Figure 1 at a time $2t_2 + \Delta t_{A1}$.

Referring to Figure 3B, the timing of wavetrain two is shown. Wavetrain two arrives at the sample after a time $t_1$ which represents the propagation time through the longer first optical fiber 14. The differential geometric path length causes a differential delay period T represented by the time difference $t_1 - t_2$. The differential path length and the delay T must exceed the coherence length and coherence time of the light source 10 so that the signals 40 and 42 at the sample end of the loop will not interfere with each other if continuous wave laser operation is used. However, a coherent light source having a longer coherence length than the differential path length could be used, provided that short bursts are used having a duration shorter than the delay T such that the wavetrains 40 and 42 in Figure 1, although coherent, would not overlap in time thus preventing any interference at the sample.

Wavetrain two encounters a delay $\Delta t_{A2}$ representing the amount of time it takes for this wavetrain to leave the probe 20D, travel to the surface 18 and travel back to the probe 20D. Thereafter wavetrain two experiences a propagation delay $t_2$ representing the travel time through the second fiber 20. Wavetrain 2 arrives at the detector 28 after a time $t_1+t_2+\Delta t_{A2}$.

Wavetrain three travels the loop between the couplers 22 and 24 in the opposite direction as wavetrain two. Referring to Figure 3C, it is seen that wavetrain three arrives at the sample after a time $t_2$ representing the propagation time through the second optical fiber 20. Wavetrain three experiences a differential time delay of $\Delta t_{A3}$ representing the time it takes to travel from the probe to the surface 18 and back to the probe. Thereafter, wavetrain three travels back through the first optical fiber 14, a trip which takes a time $t_1$, and arrives at the detector after a time delay of $t_1+t_2+\Delta t_{A3}$. Therefore wavetrains two and three arrive at the detector 28 at approximately the same time except that they are shifted in time by an amount $\Delta t=\Delta t_{A2}-\Delta t_{A3}$.

Inspection of Figure 3D shows that wavetrain four arrives at the detector 28 after a time $2t_1+\Delta t_{A4}$. This is a substantially different arrival time from the arrival time of wavetrain one. Wavetrain four emerges from the fiber segment 20B in Figure 1 last in time as the pulse 48 indicated generally at 50 in Figure 1.

It can be seen from inspection of Figures 3A and 3C that the pulse 42 arriving at the sample is actually comprised of the combined wavetrains one and three arriving at a time $t_2$. Likewise, from inspection of Figures 3B and 3D it is apparent that the pulse or wavetrain 40 arriving at the sample 16 is comprised of the combined wavetrains 2 and 4 arriving after a delay of $t_1$.

Because wavetrains one and four arrive at the detector separated by a time delay of approximately $2T$, wavetrains one and four will not interfere even if they overlap in time. This is because they are incoherent relative to each other since $T$ exceeds the coherence time of the source 10. However, wavetrains two and three arrive at approximately the same time, the difference in their arrival time being the differential time of propagation for each from the end of the probe to the surface 18 and back to the probe. Although wavetrains 2 and 3 were incoherent relative to each other when they arrived at the sample 16 because they were separated in time by the delay $T$, the delay $T$ is imposed in the reverse fashion on the trip back to the detector to slow the first arriving wavetrain (three) down so as to become coherent again with the later arriving wavetrain (two).

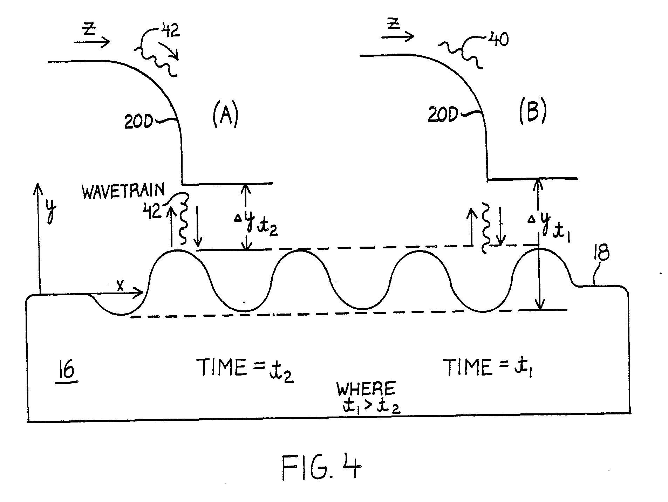

Figure 4 shows a graphic representation of how the amplitude of the surface acoustic wave, or the planar movement the surface 18 toward and away from the probe, changes the path length to the surface 18 for the wavetrains one through four comprising the signals 42 and 40. Figure 4A represents the time $t_2$ when the signal 42 arrives at the surface 18. Figure 4B represents the later time $t_1$ when the wavetrain 40 arrives at the surface 18. For purposes of this discussion three axes have been established for reference: y is the vertical direction or the direction of travel of wavetrains between the end of the probe 20D and the surface 18; x is the direction of travel of the surface acoustic wave along the surface 18, and z is the direction of travel along the optical fiber.

A mathematical expression for the amplitude of the wavetrain 42 at any point z on the fiber is given in equation 1 below.

The amplitude of reflected wave at any point z in the probe at any time t is:

$$e^{j\ (\omega t - kz - 2kA\ \sin\ \omega_A t)} \tag{1}$$

where
   $\omega=$ the angular frequency of the light,
   $t=$ the time,
   $k=$ the wave number of the light, i.e., $2\pi/\lambda$, where $\lambda$ equals the wavelength of the light. Wavelength equals the distance travelled by the wave during one cycle or c/f where c equals the speed of light in meters per second and f equals the frequency in cycles per second. The wave number times the distance travelled, z, represents the angle of a phasor expressing the light wave at the point z in the fiber.

The last expression $2\,k\,A\,\sin\,\omega_A t$ represents the phase shift caused by the transit time for the path $\Delta y$ travelled by the wavetrain from the end of the probe 20A to the surface 18 where $A\,\sin\,\omega_A t$ represents the amplitude A of a sinusoidal surface acoustic wave of frequency $\omega_A$. The term $2kA\,\sin\,\omega_A t$ represents the phasor angle reached during the transit time for travel to the surface and back when the amplitude of the surface wave is $A\,\sin\,\omega_A t$.

In Figure 4A, the differential path to the surface 18 from the end of the probe 20A for the wavetrain 42 is $\Delta y_{t_2}$ which equals:

$$\Delta y_{t_2}=D-A\,\sin\,\omega_A t_2 \tag{2}$$

where
   $D=$ the fixed distance to the surface when there is no surface displacement.

In Figure 4B, the differential path to the surface 18 from the end of the probe 20A for the wavetrain 40 is $\Delta y_{t_1}$ which equals:

$$\Delta y_{t_1}=D-A\,\sin\,\omega_A t_1 \tag{3}$$

Since $t_1$ is greater than $t_2$, a phase difference between the wavetrains 42 and 40 arises. Expressed another way, the phase difference $\phi_A$ between the reflected wavetrain resulting from the wavetrain 42 and the reflected wavetrain resulting from the wavetrain 40 is:

$$\phi=\frac{4\pi}{\lambda} A(\Delta y_{t_1}-\Delta y_{t_2})=\frac{4\pi}{Y}A (\sin \omega_A t_2-\sin \omega_A t_1) \qquad (4)$$

or the wave number times 2 times the path difference to the surface 18 at the different times $t_1$ and $t_2$.

The point is that to determine the desired unknown, i.e., the amplitude A of the surface acoustic wave, it is necessary to measure the phase difference between the reflected wavetrains.

It is well known that two coherent light waves of the same frequency will interfere with each other if they overlap in space and time and are of the same polarization. The resulting amplitude at any point in space and time from the interfering waves equals the sums of all the amplitudes of the waves which interfere at the same point in space and time. When wavetrains two and three are coupled by the coupler 22 into the fiber segment 20B, they coexist in space and time and will interfere because they are coherent, i.e., the phase difference between all points on one wave relative to the corresponding points on the other wave is the same. The amplitude of the signal 46 (the second signal at the detector 28) will depend upon the phase difference between wavetrains two and three. The amplitude $A_{46}$ of the signal 46 at the detector will be

$$A_{46}=A_2+A_3=A_2 \ e^{j\omega t}+A_3 e^{j(\omega t-\phi_A)} \qquad (5)$$

where $A_{46}$, $A_2$ and $A_3$ represent the phasors defining the signal 46 and the wavetrains two and three respectively. A phasor is a rotating vector in the complex plane where the vertical axis (y axis) is imaginary, represented by the operator $j=\sqrt{-1}$, and the horizontal axis is the real axis. Formula (5) represents a vector addition.

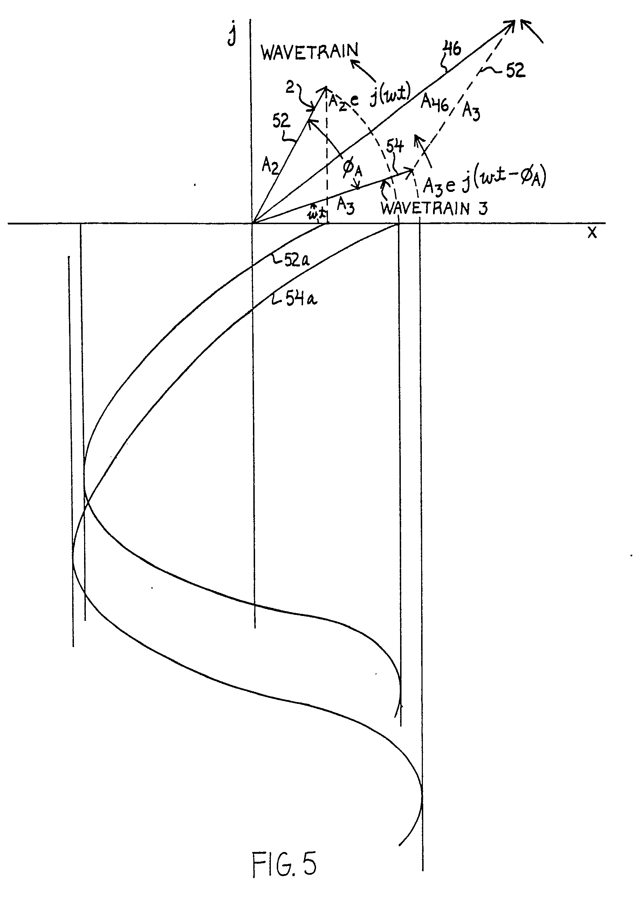

Figure 5 illustrates the vector addition represented by the Formula (5). Wavetrain two is represented by the phasor 52 having the amplitude $A_2$. Wavetrain three is represented by the phasor 54 having the amplitude $A_3$ and lagging the phasor 52 by the phase angle $\phi_A$. The amplitude of each phasor is the length of the arrow and its phase angle is the angle to the x axis. The angles represent the angular velocity of rotation of the phasors times the time of arrival at the detector as shown for the wavetrains two and three in Figures 3B and 3C. The vector addition is done by taking the phasor 52 and placing its tail at the head of the phasor 54 at the same relative angle $\phi_A$ as shown in phantom in Figure 5. The resultant phasor $A_{46}$ represents the signal 46 at the detector 28 in Figure 1.

The projections of the phasors 52, 54 and 46 on the real axis x represent the sinusoidal functions expressing the amplitudes of the signals in time. That is, the sinusoid 54a plotted below the phasor diagram represents the projection of the phasor 54 on the real axis and the sinusoid 52a represents the projection of the phasor 52 on the real axis. The function 52a is:

$$\hat{A}_2=A_2 \sin \omega t \qquad (6)$$

and the function 54a is:

$$\hat{A}_3=A_3 \sin (\omega t-\phi_A) \qquad (7)$$

The detector 28 is only sensitive to intensity but intensity is a function of amplitude. Total intensity I from two interfering waves of amplitude $A_2$ and $A_3$ is related to the amplitudes of the two components by:

$$I_{det}=(\hat{A}_2+\hat{A}_3)^2 \qquad (8)$$

Therefore the intensity at the detector 28 is:

$$I_{46}=\hat{A}_2{}^2+\hat{A}_3{}^2+2 \ \hat{A}_2 \ \hat{A}_3 \qquad (9)$$

where $\hat{A}_2$ and $\hat{A}_3$ are the phasors representing wavetrains two and three. The current out of the detector resulting from the combined wavetrains two and three will be proportional to the intensity of the signal 46 at the detector, $I_{46}$. Only the last term $2\hat{A}_2 \hat{A}_3$ will be dependent upon the amplitude A of the movement of the surface 18 because only the magnitude of $\hat{A}_2 \hat{A}_3$ depends on the phase difference $\phi_A$ between wavetrains two and three. This last term $2 \hat{A}_2 \hat{A}_3$, when expressed in terms of sinusoids, is:

$$\hat{A}_2\hat{A}_3=\sin (\omega t) \sin (\omega t-\phi)_A \qquad (10)$$

where $\phi_A$ is related to A by the formulas (2), (3) and (4) above by a simple trigonometric identity:

$$\hat{A}_2 \ \hat{A}_3 = \cos \ (2\omega t - \phi_{A)} + \cos \ \phi_A \qquad (11)$$

It can be seen from equation (4) that $\phi_A$ in equation (11) varies proportionally to the amplitude A of the surface wave to the first power. Further, if a fixed phase shift of $\pi/2$ is added between wavetrains two and three when there is no surface displacement, then the last term in equation (11) becomes sin $\phi_A$. If $\phi_A$ is small, then it follows that there will be an output therm in $I_{46}$ which varies linearly with $\phi_A$ and hence is linearly proportional to the amplitude A of the surface wave, and has a frequency $\omega_A$. This is useful because an integrating lock-in amplifier is used to filter out just the desired last term of equation (10). Part of the process of doing this filtering involves integration over a long time period to improve the signal to noise ratio. The output voltage from the lock-in amplifier will be zero for no surface movement and will vary linearly with the amplitude A of the displacement.

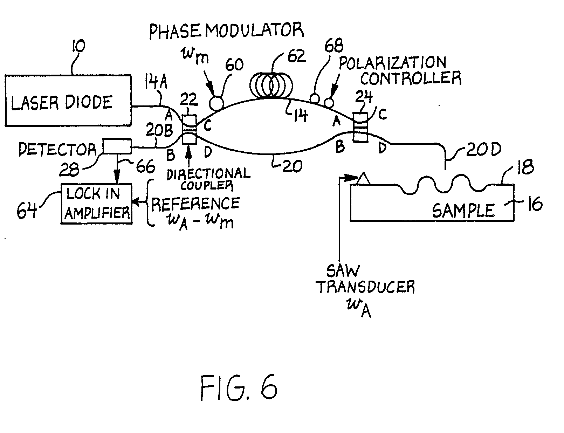

It is desirable to have a sensitive linear sensor which will generate an output signal which is linearly proportioned to the surface wave amplitude and which has a zero output voltage for a zero surface displacement. Certain modifications, including the addition of a lock-in amplifier, help obtain these objectives. These modifications to the structure of Figure 1 are shown in Figure 6.

Figure 6 is a schematic of a surface acoustic wave (SAW) sensor in accordance with the preferred embodiment of the invention. A laser diode 10 is connected to the optical fiber 14A and the detector 28 is connected to the optical fiber 20B. The fibers 14A and 20B pass through the 3db directional coupler 22 which divides the optical signal from laser diode 10 equally between the lines 14 and 20. After passing through the directional coupler 22, the fiber 14 passes through a phase modulator 60 and then through a plurality of coils 62 of optical fiber which function as a delay line. A polarization controller 68 allows any plane of polarization to be selected for light leaving the controller in either direction for input light in any plane of polarization. This allows control of the polarization of the light signals being interfered in the fiber segment 20B such that the two counterpropagating wavetrains arrive at the detector in the same polarization and it allows the selection of any constant relative phase shift between the counterpropagating wavetrains to be interfered. Fibers 14 and 20 then pass through the second directional coupler 24 with the fiber 20D extending from the coupler 24 to direct the optical signal to the surface 18 of the sample 16. The optical signal is then reflected back into the fiber probe 20D. The fibers 14 and 20 between the directional couplers 22 and 24 comprise a closed loop optic fiber interferometer. A lens (not shown) can be added between the sample and the optical fiber to increase the amount of light collected from the surface.

The phase modulator 60 is a block of piezoelectric material that is driven by an electrical signal having a frequency $\omega_M$ such that the block changes its physical dimensions through radial expansion. The optical fiber 14 is wrapped around the block such that time varying forces are placed on the fiber 14 which stretch the fiber. Said stretching and causes the path length of the counterpropagating wavetrains to vary sinusoidally at the frequency of the drive signal for the phase modulator. This causes each counterpropagating wavetrain to be phase modulated by a time varying phase shift relative to the same wavetrain travelling through the same fiber in the absence of the phase modulator.

The principal reason for the presence of the phase modulator 60 is to cause lower difference frequencies to be generated to which the detector is more sensitive as will be explained below. The principal cause of the sinusoidal change in relative phase is the increased and decreased relative propagation times for the counterpropagating wavetrains in the fiber 14 versus their propagation times if there was no phase modulator. When this phase shift at the frequency $\omega_m$ of the modulator 64 is added to the $\omega_A$ frequency of phase shift caused by the surface displacement, a modulation effect occurs which generates phase shifts at the sum frequency and at the difference frequency $\omega_A - \omega_M$, i.e., upper and lower sidebands are created. Some additional harmonics are also generated.

That is, the presence of the phase modulator causes heterodyning or interference beating to occur at the detector which causes the aforementioned upper and lower sidebands of energy to exist. The lower sidebands are desired because they have a frequency of $\omega_A - \omega_M$ which is lower than the acoustic wave frequency $\omega_A$. This lower frequency lies in a range of frequencies to which the detector 28 is more sensitive which causes the sensor of Figure 6 to be more sensitive with the phase modulator 60 present than when it is not present, although the invention will work without the presence of the phase modulator 60.

The phase modulator 60 could theoretically be placed anywhere in the fiber path of the second and third wavetrains, but placement between the couplers 22 and 24 is preferred.

Any other form of modulation could also be used to cause the heterodyning to a different, lower frequency. That is, frequency modulation or intensity modulation for example would also work, and any known structure to accomplish these purposes could be substituted for the phase modulator 60 such as some circuit to intensity modulate the light source 10. Such a technique would have the advantage that intensity modulation of a laser diode can be accomplished at a much higher frequency than can be accomplished with present phase modulators. This means that much higher frequencies of surface acoustic waves can be sensed because the lower sideband frequency can be always be kept in the frequency range of the best sensitivity for the detector 28.

To determine the maximum amplitude of the SAW, the length of the delay loop 62 of fiber in the fiber 14 must be chosen such that the relative delay T is long enough to cause the signals 40 and 42 to arrive at a peak and trough of the longest wavelength of interest of the acoustic wave or surface displacement. That is, T determines the lowest frequency acoustic wave of which the maximum amplitude can be measured. The presence or absence of lower frequencies can be sensed with a given T but the maximum amplitude thereof cannot be determined unless T is increased. The length of the loop 62 must also be chosen such that the optical propagation time through it is greater than the coherence time of the laser. It is important that the difference in transit times of fiber 14 relative to fiber 20 be such that the signals 40 and 42 in Figure 1 arrive in either of two conditions: coherent but not overlapping in time; or, overlapping in time but one wavetrain incoherent relative to the other. The reason is that interference must be avoided in the probe so that two, separate and independent wavetrains arriving at different times can be observed. If one wavetrain interfered with the other in the probe, the phase shift effect caused by the surface movement would not be observable, and there would be no way to determine the amplitude and frequency of the movement of the surface 18. Thus for cw operation the length of the fiber 20 is not critical other than that the differential path length between the fibers 14 and 20 must exceed the coherence length of the source 10. Where low power lasers are used, continuous wave operation is better in terms of signal-to-noise ratio performance because the output of the detector 28 can be integrated over a longer period. This gives better discrimination of the desired lower sideband component of the detector output signal on the line 29 over the laser noise, shot noise and thermal noise generated in the system. For continuous wave operation, the coherence length must be shorter than the differential path length. This can be achieved by using a multilongitudinal mode laser diode such as a GO-ANA laser diode manufactured by General Optronics. Higher power lasers can be operated with short pulses or bursts and coherence length is not a problem so long as the duration of the bursts is related to the differential time delay T such that there is no wavetrain overlap in time at the sample between the signals 40 and 42 and their reflected counterparts.

In the preferred embodiment the optical fiber 14 is coiled to create the delay, but in other embodiments, variable delay lines such as the structures described in EP—A—0 126 065, or EP—A—0 124 523 and described in an article dated November 11, 1982, entitled "Fiber Optic Variable Delay Lines", Electronics Letters, Vol. 18, No. 23, pp. 999—1000 or other delay line structures might be used.

A lock-in amplifier 64 is used to filter and integrate the electrical output signal from the detector 28 on the wire 66. Because the lock-in amplifier has an upper cutoff frequency of 100 kHz, heterodyning, as caused, for example by use of the phase modulator 60, is necessary to beat the acoustic frequency down to a range within the frequency response of the lock-in amplifier. It will be seen from equation (12) below that the output signal from the detector 28 has a D.C. component, a zero term, and upper and lower sideband components plus harmonics thereof. The lower sideband component has an amplitude which varies linearly with the amplitude of the surface displacement for small surface displacement amplitudes and has a frequency equal to the surface displacement frequency $\omega_A$ minus the frequency of the phase modulator $\omega_M$. This is the only component of interest, and must be filtered out from the rest of the frequency components in the output of the detector 28.

Because the lock-in amplifier acts as a very narrow bandpass filter, its presence vastly improves the sensitivity of the system since it filters out all unwanted components of the output signal on the line 66. That is, it selects, integrates over time and amplifies only the desired lower sideband component. The integration over time assures a good signal-to-noise ratio. The lock-in amplifier selects and filters out the desired frequency component by comparing the incoming frequencies with a reference frequency set at the frequency of the desired component. In this case the reference signal is set at the lower sideband frequency $\omega_A-\omega_M$ and is derived from the two driving signals for the phase modulator 60 and the SAW transducer 30. The system will work without the lock-in amplifier such as by substituting an oscilloscope, but the lock-in amplifier is the preferred embodiment. Any conventional lock-in amplifier will do with the proper upper cutoff frequency, i.e., a cutoff frequency greater than the lower sideband or difference frequency.

A polarization controller 68 is placed in the fiber 14 between the first and second couplers to control the polarization of the light leaving the polarization controller in either direction. Light travelling in an optical fiber at one polarization travels at a different speed than light travelling in the same fiber at a different polarization because of birefringence. Birefringence is the property of optical fiber which causes light polarized in different orientations to travel at different velocities through the same fiber. It is important in this application that precise control of phase shifts between two wavetrains moving in different fibers be maintained. For this reason, multimode fiber would not work well because the modal dispersion possible in multimode fiber renders precise control of relative phase shifts impossible. Any polarization can be set at the polarization controller 68. Because the geometric paths to the detector 28 from the controller 68 for each of the counter propagating wavetrains is different, and because the velocities of propagation in different polarization modes are different, thus allowing adjustment of the optical paths travelled by the counterpropagating light signals so that they are different. Thus, it is possible through adjustment of the controller to create a fixed relative phase shift between the wavetrains to be interfered.

To expand on the above assertion, it is well known that two orthogonal polarization modes of propagation with two different indices of refraction exist in monomode fibers. Because the two different polarization modes have different indices of refraction, they propagate at different velocities since the index of refraction is another way of defining the velocity of propagation. The polarization controller 68 can be located anywhere between the couplers 22 and 24 as long as the position is offset from the geometric center of the path from the light source to the detector. The differing geometric paths from the controller to the detector for the counterpropagating wavetrains two and three travelling in the same polarization results in different transit times for each wavetrain. This results in a fixed, selected phase difference between them. That is, for a greater distance travelled by one counterpropagating wavetrain in one polarization compared to a different, shorter distance travelled by the other counterpropagating wavetrain in the same polarization, a relative phase shifts between the two wavetrains will arise because of the different transit times through the same path.

The controller 68 is adjusted in the preferred embodiment such that wavetrains two and three are in the same polarization and $\pi/2$ radians out of phase when there is no displacement of the surface 18. The two wavetrains must be in the same polarization at the detector 28 for maximum interference. The $\pi/2$ fixed phase shift results from the differing geometric path lengths around the loop in opposite directions while in the same polarization as explained above. The details of the structure and operation of a polarization controller that will work in the embodiment of Figure 6 are given in U.S. Patent 4389090 and in an article entitled "Single Mode Fiber Fractional Wave Devices and Polarization Controllers", by Herve Levre, published in *Electronics Letters*, Vol. 16, No. 20, of September 25, 1980, in the February 1981 issue at page 62-3 describing a polarization. Of course any other structure which can control the polarization and relative phase shift in accordance with criteria described herein will suffice.

By the operation of the polarization controller 68 and the phase modulator 60, a constant relative phase change results between the counterpropagating wavetrains two and three where each wavetrain is also modulated with a time-varying phase difference at the frequency of the phase modulator 60.

A $\pi/2$ relative phase difference between the two interfering sinusoidal input components to the detector on the fiber 20B means that the two inputs can be expressed as sin and cosine functions since these two functions are $\pi/2$ radians out of phase.

The resultant phase change between wavetrains two and three which combine to form the second pulse or light signal 46, varies with the amplitude of the surface wave as follows. Assuming that the wavetrains which travel the paths of Figures 2B and 2C do not experience a phase shift at sample 16, the two signals will be $\pi/2$ radians out of phase and will recombine such that the output voltage from the lock-in amplifier 64 resulting from the second of the signals 46 has zero amplitude since the integral of sin time cosine over one period of the resulting function is zero. That is, the integral done by the lock-in amplifier 64 of the product of sin and cosine coming from the detector 28 on the line 66 over any multiple of the period of the function sin times cosine equals zero.

However, the presence of an acoustic wave on sample 16 will increase the amplitude of the recombined signal 46. The amplitude of the signal 46, increases to twice the amplitude of the first and third signals 44 and 48 when the acoustic amplitude is equal to $\lambda/4$, where $\lambda$ is the optical wavelength, and the two wavetrains travelling the paths of Figures 2B and 2C encounter a maximum and a minimum of the acoustic wave. Thus, by adjusting the time delay between the signals 40 and 42 in Figure 1 so that the first signal 42 reflects from the peak of the travelling surface wave and the second signal 40 reflects from the trough of the surface wave, there will be a phase difference between the two reflected signals which can be interpreted to derive the amplitude of the surface wave. Accordingly, the amplitude of the acoustic wave can be detected by observing the amplitude of the signal 46 and the frequency of the acoustic wave can be determined from the time variation of the center pulse relative to the positions of the signals 44 and 58 or by using a variable differential time delay T which corresponds to peaks and troughs of the surface acoustic wave.

If an optical pulse is used which is shorter in duration than the acoustic period, a detection bandwidth greater than the acoustic center frequency will be required. Importantly, since the two recombined wavetrains follow the same fiber paths (but in opposite directions), any temperature or pressure induced variations in the fiber length do not affect the amplitude of the output voltage, provided that the fluctuations are slow as compared to the time delay T. Similarly, variations in the probe to sample surface distance resulting from scanning non-optically flat samples will not cause a variation in the ratio of the center signal 46 to the outer signals 44 and 48.

An examination of the described sensor of Figure 6 shows that without the $\pi/2$ phase shift caused by the polarization controller 68, the output signal is proportional to $(kA)^2$ where k is the optical wavenumber and A is the acoustic wave amplitude. If there is some change in the birefringence of the fiber due to vibrations or temperature changes, this $\pi/2$ phase shift cannot be assured. Therefore, as an additional precaution, a linear dependence on the kA and greater sensitivity is obtained by using the phase modulator 20 at a frequency $\omega_M$ in the loop and by detecting the output at the difference frequency of $\omega_A - \omega_M$. An analysis of the output of the detector 28 on the line 66 using the phase modulator 60 shows that the output voltage is

$$V = V_0\{J_0(\gamma_A)J_0(\gamma_M) + 2J_1(\gamma_M)J_1(\gamma_A)\ (\sin[(\omega_A - \omega_M)t + \phi_A - \phi_M]$$

$$+\sin[(\omega_A + \omega_M)t + \phi_A + \phi_M]) + 2J_2(\gamma_M)J_0(\gamma_A)\sin(2\omega_M t + 2\phi_M)$$

$$+2J_2(\gamma_A)J_0(\gamma_M)\sin(2\omega_A t + 2\phi_A) + \ldots\} \tag{12}$$

where

$$\gamma_A = 2kA \sin\frac{\omega_A T}{2},$$

$$\gamma_M = 2kM \sin\frac{\omega_M T}{2},$$

M is the length the fiber is stretched by the phase modulator, $J_i$ is the Bessel function of the first kind of order i, and $V_0$ is given by

$$V_0 = \frac{e\eta R I_0 \alpha}{4h \omega_0} \tag{13}$$

where R is the detector load impedance, $\eta$ is the detector quantum efficiency, $I_0$ is the laser power coupled into the fiber, and $\alpha$ is the relative amount of light reflected off the sample and coupled back into the fiber core. Equation (12) is derived by taking the series expansion of the exponential describing the phase shift caused by the surface displacement, i.e., equation (1), and multiplying it by the series expansion which is equivalent to the exponential describing the phase shift caused by the phase modulator 60. In specific embodiments the values for these parameters were

$T=1$ μs, $f_A=500$ kHz, $f_M=400$ kHz, $I_0=450$ μW, $R=10$ kΩ, $\eta=.8$ and $\alpha=(10)$.

In most applications, the acoustic amplitude is orders of magnitude smaller than the optical wavelength and the output at the frequency $\omega_A-\omega_M$ is $V_{out}=\gamma A$. The proportionality constant $\gamma$ is theoretically predicted to be 52 $\mu V_{rms}$/Angstrom when the voltage applied to the phase modulator is adjusted to maximize $J_1(kM)$.

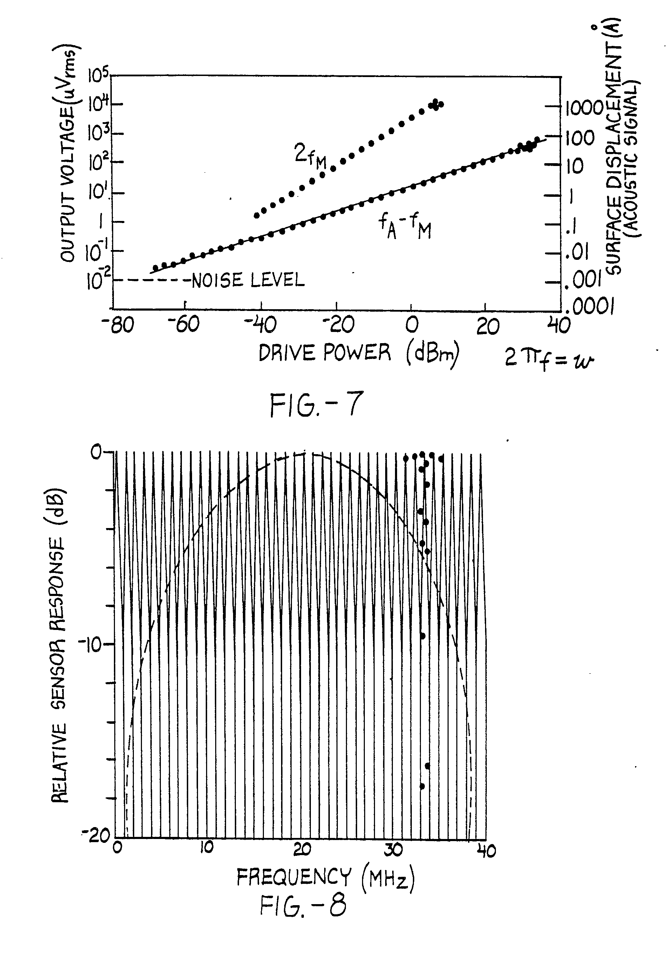

Using a polished stainless steel sample excited by a 6 cm wide PZT transducer with a center frequency of .5 MHz, the output voltage dependence on acoustic power is shown in Figure 7. It can be seen that the dependence is linear over the range in acoustic power of 110 dB. The power output at $2\omega_M$ as a function of the phase modulator power is also plotted in Figure 7. This sensor can be easily and precisely calibrated by comparing the output at the difference frequency $\omega_A-\omega_M$ with the maximum output at $2\omega_M$, i.e., 26 mV$_{rms}$ in this embodiment. In this way, the proportionality constant $\gamma$ between the surface acoustic wave amplitude and the output rms voltage was found to be $\gamma=24$ μV/Angstrom. With a lock-in amplifier integration time of .1 sec, the rms noise level was .01 μV, which results in a sensitivity of .0003 Angstroms. The best sensitivity reported previously was .002 Angstroms for the same integration time.

One reason a smaller acoustic amplitude can be detected is that a low-frequency output ($\omega_A-\omega_M=2\pi$ 100 kHz) is obtained by appropriately adjusting the phase modulator frequency. Consequently, a high input impedance amplifier can be connected to the detector, and the output signal will be large enough that thermal noise is small compared to shot and laser noise. However, in one prior art sensor described in an article by R. L. Whitman and A. Korpel, Applied Optics 8, 1567 (1969), two relatively high frequencies must be detected and the thermal noise of the first amplifier is often the limiting factor. For fiber probe applications where the acoustic frequency is significantly higher than available fiber phase modulator frequencies, a low-frequency output can still be obtained by modulating the intensity of the laser diode at a frequency $\omega_{LD}$. In this case a difference frequency output is obtained at a frequency of $\omega_A-\omega_{LD}\pm\omega_M$. The output signal decreases by 8 dB because (1) for the laser diode used here, $I_1/I_0=1/4$ for modulation frequencies up to 1.3 GHz, and (2) half of the signal is upshifted to $\omega_A+\omega_{LD}\pm\omega_M$.

The frequency dependence of the sensor sensitivity is important. This dependence is given by the relation between $\gamma_A$ and $\omega_A$ in equation (12), and is plotted in Figure 8 for two loop lengths T. Typically, the loop length is fixed after the couplers have been fabricated; however, an all-fiber variable delay line allows the frequency response to be adjusted over a wide range. Note that any of the higher harmonics $f=n\ 1/T$, $n=1, 2, \ldots$ can be used. A LiNbO$_3$ delay line 2 with 34 MHz transducers was used with the thirty-third harmonic of a 1 μs differential delay loop to obtain the experimental points in Figure 8. The dynamic range with the LiNbO$_3$ device was 78 dB. The dynamic range is less than 110 dB because (1) the acoustic amplitude decreases as $1/\omega$ for a constant input power to the transducer, and (2) the output drops by 8 dB when the laser diode modulation scheme discussed above is used.

A problem may arise with the use of single mode fibers in this application in getting the reflected light back into the single mode of the fiber. A fiber to substrate distance of 10 micrometers is convenient for scanning and results in 25% of the incident light coupled back into the core for a polished highly reflecting surface, and 13% coupling for a surface with 0.5 micrometer roughness. A SELFOC lense between the fiber and sample can be used to increase the amount of light coupled back into the fiber and also to probe the typically rough samples of interest in nondestructive evaluation.

In alternative embodiments the laser diode can be intensity modulated at a frequency $\omega_{LD}$, and the

12

# EP 0 091 826 B1

desired signal can be detected at any of the sum and difference frequencies of acoustic frequency, $\omega_A$, with either $\omega_{LD}$ or $\omega_M$. Typically, the lowest of the difference frequencies is detected thereby allowing the use of a high impedance post detection amplifier which increases the signal-to-noise ratio.

Further, if the reflectivity of a sample varies over the scanning surface, this may cause errors in detecting the acoustic amplitude, as can be seen in equations (12) and (13) with reference to a spatially varying reflectivity $a$. This effect can be minimized by detecting at an additional frequency not containing $\omega_A$, e.g. $\omega_{LD}\pm\omega_M$. The first detected signal is then divided by the additional detected signal whereby dependence on sample reflectivity is eliminated.

There has been described an all-fiber sensor for surface acoustic waves which has improved sensitivity and stability. While the invention has been described with reference to a specific embodiment the description is illustrative of the invention and not limiting the invention.

## Claims

1. An apparatus for detecting small displacements of a surface, comprising:
a light source (10) for producing light (12);
a first coupler (22) for splitting said light (12) into first and second light signals;
means for directing (20D) said light (12) onto said surface (18);
delay line means (14, 20) for delaying said first light signal relative to said second light signal by a delay period; and
a detector (28) for detecting light reflected back from said surface (18), characterized in that said first coupler (22) splits said light (12) from said source (10) prior to reflection of said light on said surface (18), said first (40) and second (42) light signals being directed to said surface (18) by said directing means (20D) so that signals (40, 42) are reflected back to said directing means (20D) from said surface (18) as first reflected and second reflected light signals, respectively, and in that said delay line means (14, 20) are connected to receive said first and second light signals (40, 42) from said first coupler (22) so as to delay said first light signal (40) relative to said second light signal (42) and further connected to receive said first reflected and second reflected light signals from said directing means (20D) so as to delay said second reflected signal relative to said first reflected signal by said delay period, the phase difference between said first reflected signal and said delayed second reflected signal being detected by said detector (28) in order to measure said displacement on said surface (18).

2. An apparatus as defined in Claim 1, characterized in that said light (12) which is divided by said first coupler (22) is a continuous wave of light having a coherence time which is less than said delay period.

3. An apparatus as defined in Claim 1, characterized in that said light (12) which is divided by said first coupler (22) is comprised of a coherent light pulse, said pulse having a duration less than said delay period imposed by said delay line means (14, 20).

4. An apparatus as defined in Claim 2 or 3, characterized in that said first coupler (22) evenly splits said light (12) into said first (40) and second (42) light signals.

5. An apparatus as defined in any one of the preceding claims, characterized in that said light source (10) is a laser which produces a single coherent light signal having a coherence length substantially greater than said surface displacement.

6. An apparatus as defined in any one of the preceding claims, characterized in that said delay line means (14, 20) comprises:
first (14) and second (20) fiber optic waveguides for guiding said first and second light signals, respectively; and
a second coupler (24) connected to said first (14) and second (20) waveguides to receive said first (40) and second (42) signals, said first fiber optic waveguide (14) being longer than said second fiber optic waveguide (20) by an amount sufficient to cause said first light signal (40) to be delayed relative to said second light signal (42) by said delay period.

7. An apparatus as claimed in Claim 6, characterized in that said directing means (20D) comprises a third fiber optic waveguide (20D) connected to said second coupler (24) for directing said first (40) and second (42) light signals from said second coupler (24) to said surface (18) and said first reflected and second reflected light signals from said surface (18) to said second coupler (24).

8. An apparatus as claimed in Claim 7, characterized in that said second coupler (24) is connected to receive said first reflected and second reflected light signals from said third fiber optic waveguide (20D) to couple said signals to said first (14) and second (20) fiber optic waveguides.

9. An apparatus as claimed in Claim 8, characterized in that said first and second fiber optic waveguides (14, 20) guide said second reflected and first reflected light signals, respectively, said second reflected light signal being delayed relative to said first reflected light signal by said delay period.

10. An apparatus as claimed in Claim 9, characterized in that said first coupler (22) is connected to combine said first reflected light signal and said delayed second reflected light signal from said second and first fiber optic waveguides (14, 20), respectively, to form a combined signal (46) and direct said combined signal (46) to said detector (28).

11. An apparatus as claimed in Claim 10, further characterized by a fourth fiber optic waveguide (20B) connected to said first coupler (22) for detecting said combined signal (46) to said detector (28).

**EP 0 091 826 B1**

12. An apparatus as claimed in Claim 10, characterized in that said detector (28) is a photodetector for detecting the intensity of said combined signal (46).

13. An apparatus as claimed in any one of Claims 6 to 12, further characterized by a phase modulator (62) located in either said first or said second fiber optic waveguides (14, 20) for causing a continuous periodically time-varying phase difference of light travelling in said first and second fiber optic waveguides (14, 20).

14. An apparatus as claimed in Claim 13, characterized in that said detector (28) generates an output signal component which has an amplitude which is proportional to the amplitude of the surface displacement and which amplitude varies in time at the difference frequency between the frequency of the surface displacement and the frequency of said phase modulator (62).

15. An apparatus as claimed in Claim 14, characterized in that said detector (28) includes means (64) for filtering out components of the output signal which are at frequencies other than said difference frequency and for integrating said difference frequency component over a plurality of periods of said difference frequency.

16. An apparatus as claimed in Claim 3, characterized in that said pulses are of a duration less than the period of the surface displacement to be sensed.

17. An apparatus as claimed in Claim 16, characterized in that said detector (28) has a bandwidth greater than the center of frequency of the surface displacement to be sensed.

18. An apparatus as claimed in any one of Claims 6 to 11, further characterized by a polarization controller (68) located in either said first or said second fiber optic waveguides (14, 20) between said first coupler (22) and said second coupler (24) for causing said first reflected light signal and said delayed second reflected light signal to arrive at said detector (28) in the same polarization.

19. An apparatus as claimed in Claim 18, characterized in that said polarization controller (68) is coupled to one of said first and second fiber optic waveguides (14, 20) at a location selected to cause said first reflected light signal and said delayed second reflected light signal to arrive at said detector (28) shifted in relative phase by $\pi/2$ radians to provide a phase difference of $\pi/2$ in addition to any phase difference caused by said displacements of said surface (18).

20. An apparatus as claimed in Claim 18, characterized in that said first (22) and second (24) couplers are fiber optic directional couplers.

21. A method of sensing displacement of a surface (18), comprising the steps of:
directing light emitted by a light source (10) to said surface (18), splitting said light (12) into first and second light signals (40, 42), delaying said first light signal (40) relative to said second light signal (42) by a delay period by means of an optical delay line device (14, 20);
detecting light reflected back from said surface (18), characterized by the steps of:
splitting said light (12) before said light (12) impinges on said surface (18); and
delaying said first light signal (40) so that first signal (40) arrives at said surface (18) a time period T after said second light signal (42);
receiving in said optical delay device (14, 20) first reflected and second reflected light signals reflected from said surface (18) corresponding to said first (40) and second (42) light signals, respectively, said second reflected signal preceding said first reflected signal; and
delaying said second reflected optical signal by said time period T, thereby providing a delayed second reflected light signal;
combining said delayed second reflected light signal and said first reflected light signal to cause interference therebetween; and
evaluating in said detector (28) the relative phase shift between said first reflected signal and said delayed second reflected signal in said combined signal (46) to determine said displacement of said surface (18).

22. A method as claimed in Claim 21, characterized in that said optical delay device comprises first and second fiber optic waveguides (14, 20) for guiding said first and second coherent light signals (40, 42), respectively.

23. A method as claimed in Claim 21 or 22, further characterized by the step of detecting the amplitude of the combined signal (46) caused by said interference.

24. A method as claimed in Claim 21 or 22, characterized in that said first and second light signals (40, 42) are pulses.

25. A method as claimed in Claim 21 or 22, characterized in that said first and second light signals (40, 42) are continuous wave signals generated by a short coherence length source (10).

26. A method as claimed in Claim 21 or 22, further characterized by the steps of:
phase modulating the first and second reflected optical signals at a modulation frequency which is related to the frequency of movement of said surface (18) such that the difference frequency between the modulation frequency and the surface movement frequency lies within a predetermined range; and
detecting the amplitude of the combined signal (46) at said difference frequency.

27. A method as claimed in Claim 21 or 22, further characterized by the steps of:
intensity modulating said first and second optical signals (40, 42) at a modulation frequency related to the frequency of movement of said surface (18) such that the difference frequency lies within a predetermined range; and

14

detecting the amplitude of the combined signal (46) at said difference frequency.

28. A method as claimed in Claim 26, further characterized by the steps of:

intensity modulating said first and second optical signals (40, 42) at a second modulation frequency;

detecting the amplitude of the combined signal (46) at either the sum or difference frequency between said modulation frequency and said second modulation frequency to provide a first detected signal;

detecting the amplitude of the combined signal (46) at the difference frequency between said modulation frequency and the frequency of movement of said surface (18) to provide a second detected signal; and

dividing said second detected signal by said first detected signal to provide a measure of the amplitude of the surface movement which is substantially independent of sample reflectivity.

**Patentansprüche**

1. Vorrichtung zum Detektieren kleiner Verschiebungen einer Oberfläche, die folgende Bestandteile umfaßt:

Eine Lichtquelle (10) zur Erzeugung von Licht (12),

einen ersten Koppler (22) zum Aufspalten dieses Lichts (12) in ein erstes und ein zweites Lichtsignal,

eine Leiteinrichtung (20D), die dazu dient, das Licht (12) auf die Oberfläche (18) zu leiten,

Verzögerungsleitungseinrichtungen (14, 20), die dazu dienen, das erste Lichtsignal relativ zum zweiten Lichtsignal um eine Verzögerungs-Zeitspanne zu verzögern, und

einen Detektor (28), der dazu dient, das von der Oberfläche (18) zurückreflektierete Licht zu detektieren, dadurch gekennzeichnet,

daß der erste Koppler (22) das Licht (12) von der Quelle (10) vor der Reflexion des Lichtes an der Oberfläche (18) aufspaltet, daß das erste (40) und das zweite (42) Lichtsignal durch die Leiteinrichtung (20D) so auf die Oberfläche (18) geführt werden, daß die Signale (40, 42) von der Oberfläche (18) als erste reflektiertes Lichtsignal bzw. zweites reflektiertes Lichtsignal zur Leiteinrichtung (20D) zurückreflektiert werden, und daß die Verzögerungsleitungseinrichtungen (14, 20) so angeschlossen sind, daß sie das erste und das zweite Lichtsignal (40, 42) zum ersten Koppler (22) so empfangen, daß sie das erste Lichtsignal (40) bezüglich des zweiten Lichtsignals (42) verzögern, und daß sie weiterhin so angeschlossen sind, daß sie das erste reflektierte und das zweite reflektierte Lichtsignal von der Leiteinrichtung (20D) so empfangen, daß sie das zweite reflektierte Signal relativ zum ersten reflektierten Signal um die Verzögerungszeitspanne verzögern, wobei die Phasendifferenz zwischen dem ersten reflektierten Signal und dem verzögerten zweiten reflektierten Signal durch den Detektor (28) detektiert wird, um die Verschiebung auf der Oberfläche (18) zu messen.

2. Vorrichtung nach Anspruch 1, dadurch gekennzeichnet, daß das Licht (12), das durch den ersten Koppler (22) geteilt wird, eine kontinuierliche Lichtwelle ist, die eine Kohärenzzeit aufweist, die kleiner ist als die Verzögerungszeitspanne.

3. Vorrichtung nach Anspruch 1, dadurch gekennzeichnet, daß das Licht (12), das durch den ersten Koppler (22) geteilt wird, aus einem kohärenten Lichtimpuls besteht, der eine Dauer aufweist, die kleiner ist als die Verzögerungszeitspanne, die durch die Verzögerungsleitungseinrichtungen (14, 20) aufgeprägt wird.

4. Vorrichtung nach Anspruch 2 oder 3, dadurch gekennzeichnet, daß der erste Koppler (22) das Licht (12) gleichmäßig in das erste (40) und das zweite (42) Lichtsignal aufspaltet.

5. Vorrichtung nach einem der vorhergehenden Ansprüche, dadurch gekennzeichnet, daß die Lichtquelle (10) ein Laser ist, der ein einzelnes kohärentes Lichtsignal erzeugt, das eine Kohärenzlänge besitzt, die wesentlich größer ist als die Oberflächenverschiebung.

6. Vorrichtung nach einem der vorhergehenden Ansprüche, dadurch gekennzeichnet, daß die Verzögerungsleitungseinrichtungen (14, 20) folgende Bestandteile umfassen:

Einen ersten (14) und einen zweiten (20) faseroptischen Wellenleiter, die dazu dienen, das erste bzw. das zweite Lichtsignal zu leiten, und

einen zweiten Koppler (24), der mit dem ersten (14) und dem zweiten (20) Wellenleiter so verbunden ist, daß er das erste (40) und das zweite (42) Signal empfängt, wobei der erste faseroptische Wellenleiter (14) um ein Stück länger als der zweite faseroptische Wellenleiter (20) ist, das ausreicht, um zu bewirken, daß das erste Lichtsignal (40) bezüglich das zweiten Lichtsignals (42) um die Verzögerungszeitspanne verzögert wird.

7. Vorrichtung nach Anspruch 6, dadurch gekennzeichnet, daß die Leiteinrichtungen (20D) einen dritten faseroptischen Wellenleiter (20D) umfassen, der mit dem zweiten Koppler (24) verbunden ist, um das erste (40) und das zweite (42) Lichtsignal von dem zweiten Koppler (24) zur Oberfläche (18) und das erste reflektierte und das zweite reflektierte Lichtsignal von der Oberfläche (18) zu dem zweiten Koppler (24) zu leiten.

8. Vorrichtung nach Anspruch 7, dadurch gekennzeichnet, daß der zweite Koppler (24) so anschlossen ist, daß er das erste reflektierte und das zweite reflektierte Lichtsignal von dem dritten faseroptischen Wellenleiter (20D) empfängt, um diese Signale in den ersten (14) und den zweiten (20) faseroptischen Wellenleiter einzukoppeln.

9. Vorrichtung nach Anspruch 8, dadurch gekennzeichnet, daß der erste und der zweite faseroptische

15

Wellenleiter (14, 20) das zweite reflektierte Lichtsignal bzw. das erste reflektierte Lichtsignal leiten, wobei das zweite reflektierte Lichtsignal relativ zum ersten reflektierten Lichtsignal um die Verzögerungszeitspanne verzögert wird.

10. Vorrichtung nach Anspruch 9, dadurch gekennzeichnet, daß der erste Koppler (22) so angeschlossen ist, daß er das erste reflektierte Lichtsignal und das verzögerte zweite reflektierte Lichtsignal vom zweiten bzw. ersten faseroptischen Wellenleiter (14, 20) kombiniert, um ein kombiniertes Signal (46) zu bilden und das kombinierte Signal (46) zum Detektor (28) zu leiten.

11. Vorrichtung nach Anspruch 10, dadurch gekennzeichnet, daß ein vierter faseroptischer Wellenleiter (20B) an den ersten Koppler (22) angeschlossen ist, um das kombinierte Signal (46) zum Detektor (28) zu führen.

12. Vorrichtung nach Anspruch 10, dadurch gekennzeichnet, daß der Detektor (28) ein Photodetektor ist, der dazu dient, die Intensität des kombinierten Signals (46) zu detektieren.

13. Vorrichtung nach einem der Ansprüche 6 bis 12, dadurch gekennzeichnet, daß ein Phasenmodulator (62) entweder im ersten oder im zweiten faseroptischen Wellenleiter (14, 20) angeordnet ist, um eine kontinuierlich periodisch zeitvariierende Phasendifferenz des Lichtes zu bewirken, das sich in dem ersten und zweiten faseroptischen Wellenleiter (14, 20) ausbreitet.

14. Vorrichtung nach Anspruch 13, dadurch gekennzeichnet, daß der Detektor (28) eine Ausgangssignalkomponente erzeugt, die eine Amplitude aufweist, die proportional zur Amplitude der Oberflächenverschiebung ist und die sich in der Zeit mit der Differenzfrequenz zwischen der Frequenz der Oberflächenverschiebung und der Frequenz des Phasenmodulators (62) ändert.

15. Vorrichtung nach Anspruch 14, dadurch gekennzeichnet, daß der Detektor (28) Mittel (64) zum Ausfiltern von Komponenten des Ausgangssignals umfaßt, die bei Frequenz liegen, die von der Differenzfrequenz verschieden sind, sowie Mittel zum Integrieren dieser Differenzfrequenzkomponente über eine Vielzahl von Perioden dieser Differenzfrequenz.

16. Vorrichtung nach Anspruch 3, dadurch gekennzeichnet, daß die Impulse eine Dauer besitzen, die kleiner ist als die Periode der zu erfassenden Oberflächenverschiebung.

17. Vorrichtung nach Anspruch 16, dadurch gekennzeichnet, daß der Detektor (28) eine Bandbreite besitzt, die größer ist als die Mitte der Frequenz der zu erfassenden Oberflächenverschiebung.

18. Vorrichtung nach einem der Ansprüche 6 bis 11, dadurch gekennzeichnet, daß eine Polarisations - Steuerungseinrichtung (68) entweder in dem ersten oder in dem zweiten faseroptischen Wellenleiter (14, 20) zwischen dem ersten Koppler (22) und dem zweiten Koppler (24) angeordnet ist, um zu bewirken, daß das erste reflektierte Lichtsignal und das verzögerte zweite reflektierte Lichtsignal am Detektor (28) mit derselben Polarisation ankommen.

19. Vorrichtung nach Anspruch 18, dadurch gekennzeichnet, daß die Polarisations - Steuereinrichtung (68) mit dem ersten oder dem zweiten faseroptischen Wellenleiter (14, 20) an einer Stelle gekoppelt ist, die so ausgewählt ist, daß bewirkt wird, daß das erste reflektierte Lichtsignal und das verzögerte zweite Lichtsignal am Detektor (28) in ihrer relativen Phase um $\pi/2$ radian verschoben ankommen, um eine Phasendifferenz von $\pi/2$ zusätzlich zu jeglicher Phasendifferenz zu verursachen, die durch die Verschiebungen der Oberfläche (18) bewirkt wird.

20. Vorrichtung nach Anspruch 18, dadurch gekennzeichnet, daß der erste (22) und der zweite (24) Koppler faseroptische Richtungskoppler sind.

21. Verfahren zum Messen der Verschiebung einer Oberfläche (18), das folgende Schritte umfaßt:

Es wird Licht, das von einer Lichtquelle (10) emittiert wird, auf die Oberfläche (18) gerichtet, es wird das Licht (12) in ein erstes und ein zweites Lichtsignal (40, 42) aufgespalten, es wird das erste Lichtsignal (40) bezüglich des zweiten Lichtsignals (42) mit Hilfe einer optischen Verzögerungsleitungs - Anordnung (14, 20) um einen Verzögerungszeitraum verzögert, und es wird das von der Oberfläche (18) zurückreflektierte Licht detektiert,

gekennzeichnet durch die folgenden Schritte:

Es wird das Licht (12) aufgespalten, bevor das Licht (12) auf die Oberfläche (18) auftrifft, und

es wird das erste Lichtsignal (40) so verzögert, daß das erste Signal (40) an der Oberfläche (18) um einen Zeitraum T nach dem zweiten Lichtsignal (42) ankommt;

es werden in der optischen Verzögerungseinrichtung (14, 20) ein erstes reflektiertes Lichtsignal und ein zweites reflektiertes Lichtsignal empfangen, die entsprechend dem ersten (40) bzw. dem zweiten (42) Lichtsignal von der Oberfläche (18) reflektiert werden, wobei das zweite reflektierte Signal dem ersten reflektierten Signal vorauseilt, und

es wird das zweite reflektierte optische Signal um die Zeitspanne T verzögert, wodurch ein verzögertes zweites reflektiertes Lichtsignal erzeugt wird;

es werden das verzögerte zweite reflektierte Lichtsignal und das erste reflektierte Lichtsignal kombiniert, um eine Interferenz zwischen ihnen zu bewirken; und

es wird in dem Detektor (28) die relative Phasenverschiebung zwischen dem ersten reflektierten Signal und dem verzögerten zweiten reflektierten Signal in dem kombinierten Signal (46) ausgewertet, um die Verschiebung der Oberfläche (18) zu bestimmen.

22. Verfahren nach Anspruch 21, dadurch gekennzeichnet, daß die optische Verzögerungseinrichtung einen ersten und einen zweiten faseroptischen Wellenleiter (14, 20) umfaßt, die dazu dienen, das erste bzw. das zweite kohärente Lichtsignal (40, 42) zu leiten.

23. Verfahren nach Anspruch 21 oder 22, weiterhin gekennzeichnet durch den Schritt, daß die Amplitude des kombinierten Signals (46), die durch die Interferenz bewirkt wird, detektiert wird.

24. Verfahren nach Anspruch 21 oder 22, dadurch gekennzeichnet, daß das erste und das zweite Lichtsignal (40, 42) Impulse sind.

25. Verfahren nach Anspruch 21 oder 22, dadurch gekennzeichnet, daß das erste und das zweite Lichtsignal (40, 42) kontinuierliche Wellensignale sind, die von einer Quelle (10) mit einer kurzen Kohärenzlänge erzeugt werden.

26. Verfahren nach Anspruch 21 oder 22, weiterhin gekennzeichnet durch die Schritte, daß das erste und das zweite reflektierte optische Signal mit einer Modulationsfrequenz phasenmoduliert werden, die zu Bewegungsfrequenz der Oberfläche (18) so in Beziehung steht, daß die Differenzfrequenz zwischen der Modulationsfrequenz und der Frequenz der Oberflächenbewegung in einem vorbestimmten Bereich liegt; und daß die Amplitude des kombinierten Signals (46) bei dieser Differenzfrequenz detektiert wird.

27. Verfahren nach Anspruch 21 oder 22, weiterhin gekennzeichnet durch die Schritte, daß das erste und das zweite optische Signal (40, 42) mit einer Modulationsfrequenz intensitätsmoduliert werden, die mit der Frequenz der Bewegung der Oberfläche (18) so in Beziehung steht, daß die Differenzfrequenz innerhalb eines vorbestimmten Bereiches light; und daß die Amplitude des kombinierten Signals (46) bei dieser Differenzfrequenz bestimmt wird.

28. Verfahren nach Anspruch 26, weiterhin gekennzeichnet durch die Schritte, daß das erste und das zweite optische Signal (40, 42) bei einer zweiten Modulationsfrequenz intensitätsmoduliert werden,

daß die Amplitude des kombinierten Signals (46) entweder bei der Summen- oder der Differenzfrequenz zwischen der Modulationsfrequenz und der zweiten Modulationsfrequenz detektiert wird, um ein erstes detektiertes Signal zu liefern,

daß die Amplitude des kombinierten Signals (46) bei der Differenzfrequenz zwischen der Modulationsfrequenz und der Frequenz der Bewegung der Oberfläche (18) detektiert wird, um ein zweites detektiertes Signal zu liefern, und daß das zweite detektierte Signal durch das erste detektierte Signal geteilt wird, um ein Maß für die Amplitude der Oberflächenbewegung zu liefern, das im wesentlichen unabhängig von der Reflexivität der Probe ist.

## Revendications

1. Appareil de détection de petits déplacements d'une surface, comprenant:

une source de lumière (10) pour émettre de la lumière (12);

un premier coupleur (22) pour fractionner ladite lumière (12) en un premier et en un second signal;

des moyens pour diriger (20D) ladite lumière (12) sur ladite surface (18);

une ligne à retard (14, 20) permettant de retarder ledit premier signal de lumière par rapport audit second signal de lumière d'un temps de retard; et

un détecteur (28) permettant de détecter la lumière réfléchie par ladite surface (18), caractérisé en ce que

ledit premier coupleur (22) fractionne ladite lumière (12) provenant de ladite source (10) avant que ladite lumière ne se réfléchisse sur ladite surface (18), lesdits premier (40) et second (42) signaux de lumière étant dirigés sur ladite surface (18) par lesdits moyens de direction (20D) de telle sorte que lesdits signaux (40, 42) sont réfléchis à partir de ladite surface (18) vers lesdits moyens de direction (20D) de façon à former un premier et un second signal de lumière réfléchi, respectivement, et en ce que ladite ligne à retard (14, 20) est reliée de façon à recevoir lesdits premier et second signaux de lumière (40, 42) provenant dudit premier coupleur (22) de façon à retardir ledit premier signal de lumière (40) par rapport audit second signal de lumière (42) et de plus est reliée de façon à recevoir lesdits premier et second signaux de lumière réfléchis provenant desdits moyens de direction (20D) de façon à retarder ledit second signal réfléchi par rapport audit premier signal réfléchi dudit temps de retard, la différence de phase entre ledit premier signal réfléchi et ledit second signal réfléchi retardé étant détectée par ledit détecteur (28) de façon à mesurer ledit déplacement sur ladite surface (18).

2. Appareil tel qu'il est défini dans la revendication 1, caractérisé en ce que ladite lumière (12) qui est fractionnée par ledit premier coupleur (22) est une onde continue de lumière ayant une cohérence temporelle d'une valeur moindre que ledit temps de retard.

3. Appareil tel qu'il est défini dans la revendication 1, caractérisé en ce que ladite lumière (12) qui est fractionnée par ledit premier coupleur (22) est formée d'une impulsion de lumière cohérente, ladite impulsion ayant une durée moindre que le temps de retard imposé par ladite ligne à retard (14, 20).

4. Appareil tel qu'il est défini dans la revendication 2 ou 3, caractérisé en ce que ledit premier coupleur (22) fractionne de manière égale ladite lumière (12) en lesdits premier (40) et second (42) signaux de lumière.

5. Appareil tel qu'il est défini dans l'une quelconque des revendications précédentes, caractérisé en ce que ladite source de lumière (10) est un laser qui produit un seul signal de lumière cohérente ayant une longueur de cohérence essentiellement supérieure audit déplacement de surface.

6. Appareil tel qu'il est défini dans l'une quelconque des revendications précédentes, caractérisé en ce que ladite ligne à retard (14, 20) comprend:

un premier (14) et un second (20) guide d'onde à fibre optique permettant de guider lesdits premier et second signaux de lumière, respectivement; et

un second coupleur (24) relié auxdits premier (14) et second (20) guides d'onde afin de recevoir lesdits premier (40) et second (42) signaux, ledit premier guide d'onde à fibre optique (14) étant plus long que ledit second guide d'onde à fibre optique (20) d'une quantité suffisante pour faire en sorte que le premier signal de lumière (40) soit retardé par rapport au second signal de lumière (42) dudit temps de retard.

7. Appareil tel qu'il est défini dans la revendication 6, caractérisé en ce que lesdits moyens de direction (20D) comprennent un troisième guide d'onde à fibre optique (20D) relié audit second coupleur (24) de manière à diriger lesdits premier (40) et second (42) signaux de lumière à partir dudit second coupleur (24) vers ladite surface (18) et lesdits premier et second signaux de lumière réfléchis à partir de ladite surface (18) vers ledit second coupleur (24).

8. Appareil tel qu'il est défini dans la revendication 7, caractérisé en ce que ledit second coupleur (24) est relié de façon à recevoir lesdits premier et second signaux de lumière réfléchis à partir dudit troisième guide d'onde à fibre optique (20D) afin de coupler lesdits signaux aux premier et second guides d'onde à fibre optique.

9. Appareil tel qu'il est défini dans la revendication 8, caractérisé en ce que lesdits premier et second guides d'onde à fibre optique (14, 20) guident lesdits second et premier signaux de lumière réfléchis, respectivement, ledit second signal de lumière réfléchi étant retardé par rapport audit premier signal de lumière réfléchi dudit temps de retard.

10. Appareil tel qu'il est défini dans la revendication 9, caractérisé en ce que ledit premier coupleur (22) est relié de façon à combiner ledit premier signal de lumière réfléchi et ledit second signal de lumière réfléchi retardé provenant desdits second et premier guides d'onde à fibre optique (14, 20), respectivement, de façon à former un signal combiné (46) et à diriger ledit signal combiné (46) vers ledit détecteur (28).

11. Appareil tel qu'il est défini dans la revendication 10, caractérisé par un quatrième guide d'onde à fibre optique (20B) relié audit premier coupleur (22) de façon à détecter ledit signal combiné (46) audit détecteur (28).

12. Appareil tel qu'il est défini dans la revendication 10, caractérisé en ce que ledit détecteur (28) est un photodétecteur permettant de détecter l'intensité dudit signal combiné (46).

13. Appareil tel qu'il est défini dans l'une quelconque des revendications 6 à 12, caractérisé en outre par un modulateur de phase (62) placé sur le premier ou le second guide d'onde à fibre optique (14, 20) afin de produire une différence de phase continue à variation temporelle périodique pour la lumière se propageant dans lesdits premier et second guides d'onde à fibre optique (14, 20).

14. Appareil tel qu'il est défini dans la revendication 13, caractérisé en ce que ledit détecteur (28) produit une composante de signal de sortie qui a une amplitude proportionnelle à l'amplitude du déplacement de surface, laquelle amplitude varie dans le temps à la fréquence différentielle entre la fréquence du déplacement de surface et la fréquence dudit modulateur de phase (62).

15. Appareil tel qu'il est défini dans la revendication 14, caractérisé en ce que le détecteur (28) comprend des moyens (64) de filtrage des composantes du signal de sortie qui sont à des fréquences autres qu'à ladite fréquence différentielle et d'intégration de ladite composante à ladite fréquence différentielle sur une multiplicité de périodes de ladite fréquence différentielle.

16. Appareil tel qu'il est défini dans la revendication 3, caractérisé en ce que lesdites impulsions sont d'une durée inférieure à la période du déplacement de surface à détecter.

17. Appareil tel qu'il est défini dans la revendication 16, caractérisé en ce que ledit détecteur (28) a une bande passante plus grande que le centre de la fréquence du déplacement de la surface à détecter.

18. Appareil tel qu'il est défini dans l'une quelconque des revendications 6 à 11, caractérisé de plus par un contrôleur de polarisation (68) placé sur le premier ou le second guide d'onde à fibre optique (14, 20) entre ledit premier coupleur (22) et ledit second coupleur (24) afin de faire en sorte que le premier signal de lumière réfléchi et le second signal de lumière réfléchi retardé arrivent audit détecteur (28) dans le même état de polarisation.

19. Appareil tel qu'il est défini dans la revendication 18, caractérisé en ce que le contrôleur de polarisation (68) est relié à l'un desdits premier et second guides d'onde à fibre optique (14, 20) à une endroit sélectionné de façon à faire en sorte que le premier signal de lumière réfléchi et ledit second signal de lumière réfléchi retardé arrivent audit détecteur (28) décalés l'un par rapport à l'autre d'une différence de phase $\pi/2$ radians ce qui produit une différence de phase de $\pi/2$ en addition à toute différence de phase provoquée par lesdits déplacements de ladite surface (18).

20. Appareil tel qu'il est défini dans la revendication 18, caractérisé en ce que lesdits premier (22) et second (24) coupleurs sont des coupleurs directionnels à fibre optique.

21. Méthode de détection de déplacements d'une surface, comprenant les étapes suivantes:

diriger la lumière émise par une source de lumière (10) vers ladite surface (18), fractionner ladite lumière (12) en un premier et en un second signal de lumière (40, 42), retarder ledit premier signal de lumière (40) par rapport audit second signal de lumière (42) d'un temps de retard à l'aide d'une ligne à retard optique (14, 20);

détecter la lumière réfléchie par ladite surface (18), caractérisée par les étapes suivantes:

fractionner ladite lumière (12) avant que ladite lumière n'atteigne ladite surface (18);

18

retarder ledit premier (40) signal de lumière de façon à ce que le premier signal (40) arrive à ladite surface (18) à un moment T après le second signal de lumière (42);

recevoir dans ladite ligne à retard optique (14, 20) les premier et second signaux de lumière réfléchis de ladite surface (18) et correspondant auxdits premier (40) et second (42) signaux de lumière, respectivement, ledit second signal réfléchi précédant ledit premier signal réfléchi;

retarder ledit second signal optique réfléchi dudit moment T, de manière à produire un second signal de lumière réfléchi retardé;

combiner ledit second signal de lumière réfléchi retardé et ledit premier signal de lumière réfléchi de façon à ce que ces signaux interfèrent; et

évaluer dans ledit détecteur (28) le décalage de phase relatif entre ledit premier signal réfléchi et ledit second signal réfléchi retardé dans ledit signal combiné (46) afin de déterminer ledit déplacement de ladite surface (18).

22. Méthode tell qu'elle est revendiquée dans la revendication 21, caractérisée en ce que la ligne à retard optique comprend un premier et un second guide d'onde à fibre optique (14, 20) pour guider lesdits premier et seconds signaux de lumière cohérente (40, 42), respectivement.

23. Méthode tell qu'elle est revendiquée dans la revendication 21 ou 22, caractérisée en outre par l'étape consistant à détecter l'amplitude du signal combiné (46) produit par ladite interférence.

24. Méthode tell qu'elle est revendiquée dans la revendication 21 ou 22, caractérisée en ce que lesdits premier et second signaux de lumière (40, 42) sont des impulsions.

25. Méthode telle qu'elle est revendiquée dans la revendication 21 ou 22, caractérisée en ce que lesdits premier et second signaux de lumière (40, 42) sont des signaux d'onde continue produits par une source à longueur de cohérence courte (10).

26. Méthode telle qu'elle est revendiquée dans la revendication 21 ou 22, caractérisée en outre par les étapes suivantes:

moduler les phases des premier et second signaux optiques réfléchis à une fréquence de modulation qui est en rapport avec la fréquence du mouvement de ladite surface (18) de telle sorte que la fréquence différentielle entre la fréquence de modulation et la fréquence du mouvement de la surface se trouve dans un intervalle prédéterminé; et

détecter l'amplitude du signal combiné (46) à ladite fréquence différentielle.

27. Méthode tell qu'elle est revendiquée dans la revendication 21 ou 22, caractérisée en outre par les étapes suivantes:

moduler les intensités desdits premier et second signaux optiques (40, 42) à une fréquence de modulation en rapport avec la fréquence du mouvement de ladite surface (18) de telle sorte que la fréquence différentielle se trouve dans un intervalle prédéterminé; et

détecter l'amplitude du signal combiné (46) à ladite fréquence différentielle.

28. Méthode telle qu'elle est revendiquée dans la revendication 26, caractérisée en outre par les étapes suivantes:

moduler les intensités desdits premier et second signaux optiques (40, 42) à une seconde fréquence de modulation;

détecter l'amplitude du signal combiné (46) à la fréquence de somme ou de différence entre ladite fréquence de modulation et ladite seconde fréquence de modulation afin de produire un premier signal détecté;

détecter l'amplitude du signal combiné (46) à la fréquence de différence entre ladite fréquence de modulation et la fréquence de mouvement de ladite surface (18) afin de produire un second signal détecté; et

diviser ledit second signal détecté par ledit premier signal détecté afin de produire une mesure de l'amplitude du mouvement de surface qui est essentiellement indépendante de la réflectivité de l'échantillon.

FIG. 1

FIG.-2A

FIG.-2B

FIG.-2C

FIG.-2D

FIG. 3A — WAVETRAIN #1

FIG. 3B — WAVETRAIN #2

FIG. 3C — WAVETRAIN #3

FIG. 3D — WAVETRAIN #4

FIG. 4

FIG. 5

FIG. 6

FIG. - 7

FIG. - 8